(19) Europäisches Patentamt
European Patent Office
Office européen des brevets

(11) **EP 2 565 096 A1**

(12) **EUROPEAN PATENT APPLICATION**
published in accordance with Art. 153(4) EPC

(43) Date of publication:
**06.03.2013 Bulletin 2013/10**

(51) Int Cl.:
***B60W 30/02*** *(2012.01)* ***B60L 9/18*** *(2006.01)*
***B60W 10/08*** *(2006.01)*

(21) Application number: **11774808.7**

(22) Date of filing: **13.04.2011**

(86) International application number:
**PCT/JP2011/059174**

(87) International publication number:
**WO 2011/136024 (03.11.2011 Gazette 2011/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.04.2010 JP 2010102930**

(71) Applicant: **Nissan Motor Co., Ltd**
**Yokohama-shi, Kanagawa 221-0023 (JP)**

(72) Inventors:
• **KAGEYAMA, Yusuke**
**Kanagawa 243-0123 (JP)**

• **KIMURA, Takeshi**
**Kanagawa 243-0123 (JP)**
• **KOBAYASHI, Yosuke**
**Kanagawa 243-0123 (JP)**
• **SHIOZAWA, Yuuki**
**Kanagawa 243-0123 (JP)**
• **MURATA, Toshiyuki**
**Kanagawa 243-0123 (JP)**

(74) Representative: **Grünecker, Kinkeldey,**
**Stockmair & Schwanhäusser**
**Leopoldstrasse 4**
**80802 München (DE)**

(54) **DEVICE FOR IMPROVING VEHICLE BEHAVIOR WHEN STEERING**

(57) The drive torque of a motor for driving a vehicle wheel, as shown in (a), during the period between the start of steering t1 and an instant t2 when a prescribed interval TM1s has passed, is controlled so as to be a value which is temporarily increased from the intended motor torque by just the amount indicated by the solid line waveform in (a); and during the period between t2 and an instant t4 when a prescribed interval TM2s has passed, the drive torque of a motor for driving a vehicle wheel is controlled so as to be a value which is temporarily decreased from the intended motor torque by just the amount indicated by the solid line waveform in (a). In the t1 - t2 interval (initial stage) of (c), the turning moment becomes large according to the difference between the turning moment of the turning direction of the outer wheel Mout and the turning moment (restoring moment) of the turning direction of the inner wheel Min. The increment in the yaw rate promptly rises in the initial stage of the instant t1 - t2 as indicated by a solid line in (b), in accordance with the increase in the apparent lateral force caused by the increase in the turning moment, thus the yaw rate is caused to rise without delay, and thereby it is possible to greatly improve the steering response (initial turning characteristics) of the vehicle.

FIG.3A

FIG.3B

FIG.3C

EP 2 565 096 A1

## Description

### Technical Field

The present invention relates to apparatus for improving steered condition behavior, specifically, steering response and/or rolling behavior, of a vehicle, wherein the vehicle is capable of running with a road wheel driven by a driving force from a power source.

### Background Art

In recent years, a sprung weight of a vehicle tends to increase, wherein the sprung weight is on an upper side of a suspension device of the vehicle, for some reasons, wherein the reasons include a reason that there is a demand for low fuel consumption so that a fuel saving tire with a small rolling resistance is employed, and a fuel efficiency improving device is added, and a battery of a large capacity is required accordingly. Adoption of a fuel-saving tire leads to a decrease in friction coefficient between tire and road surface, whereas increase in sprung weight leads to an increase in suspension stroke.

Both of decrease in road surface friction coefficient and increase in suspension stroke tend to cause a decrease in steering response when steering operation is performed to steer steerable wheels, namely, a decrease in turning response of a front part (initial head-turning ability) of the vehicle when steering operation is performed. Especially for an electric vehicle which is powered only by an electric motor as a power source, the decrease in steering response is significant, because such an electric vehicle is provided with a large and heavy battery at a central place under a floor of a vehicle body. Moreover, increase in suspension stroke causes an increase in rolling motion of the vehicle that is a behavior of inclination around a longitudinal axis of the vehicle body.

For improvement of steering response which tends to decrease as described above, it has been proposed that attachment rigidity of a suspension device is enhanced by use of a high rigidity elastic bush or high rigidity insulator at a part to which the suspension device is attached, as described in a patent document 1. On the other hand, for suppression of vehicle body rolling, it is common that oscillation damping performance of a shock absorber of the suspension device is enhanced.

However, the countermeasure of enhancing the attachment rigidity of the suspension device or the countermeasure of increasing the damping performance of the shock absorber causes an increase of spring coefficient of the suspension device, and thereby causes a new problem about oscillation and noise.

### Prior Art Document(s)

### Patent Document(s)

Patent Document 1: JP 07-132720 A

### Summary of the Invention

In view of the foregoing, it is an object of the present invention to propose a steered condition vehicle behavior improving apparatus capable of improving steering response and/or rolling behavior of a vehicle during steering operation, without causing a change in attachment rigidity of a suspension device or damping performance of a shock absorber, namely, without causing a new problem about oscillation and noise by increasing the spring coefficient of the suspension device.

For that object, according to the present invention, a steered condition vehicle behavior improving apparatus for a vehicle, wherein the vehicle is capable of running with a road wheel driven by a driving force from a power source, the steered condition vehicle behavior improving apparatus is characterized by comprising: a steering operation detecting means that detects a steering operation of steering a steerable wheel of the vehicle; and a driving force increasing means that temporarily increases the driving force to the road wheel in response to detection of the steering operation by the steering operation detecting means.

With the steered condition vehicle behavior improving apparatus according to the present invention, it is possible to increase a cornering moment, which is generated by the steerable wheels, by temporarily increasing the road wheel driving force during steering operation, and thereby increase an apparent lateral force of the steerable wheels so that the yaw rate of the vehicle quickly rises, and thereby improve the steering response of the vehicle.

Furthermore, according to the present invention, it is possible to improve the vehicle behavior when steering operation is performed, without causing a change in attachment rigidity of a suspension device or the damping performance of a shock absorber, namely, without causing a new problem about oscillation and noise by increasing the spring coefficient of the suspension device.

**Brief Description of the Drawings**

FIG. 1 is a schematic system diagram showing a drive system of a vehicle and a control system for the drive system, wherein the vehicle is provided with a steered condition vehicle behavior improving apparatus according to an embodiment of the present invention.

FIG. 2 is a flow chart showing a steered condition vehicle behavior improving program executed by an electric motor controller in FIG. 1.
FIG. 3 is a time chart of operation of the steered condition vehicle behavior improving control of FIG. 2, wherein FIG. 3A is a time chart showing a change in time of driving torque correction, FIG. 3B is a time chart showing a change in time of difference of yaw rate, and FIG. 3C is a time chart showing a change in time of cornering moment generated by each steerable wheel, in comparison with a case in which the steered condition vehicle behavior improving control of FIG. 2 is not performed.
FIG. 4 is an explanation diagram showing specifications of a steerable wheel about tire contact surface.
FIG. 5 is an explanation diagram showing specifications of the vehicle.
FIG. 6 is a time chart showing a change in time of a lateral force resulting from a difference in cornering moment between inside and outside wheels in a case where the steered condition vehicle behavior improving control of FIG. 2 is performed.

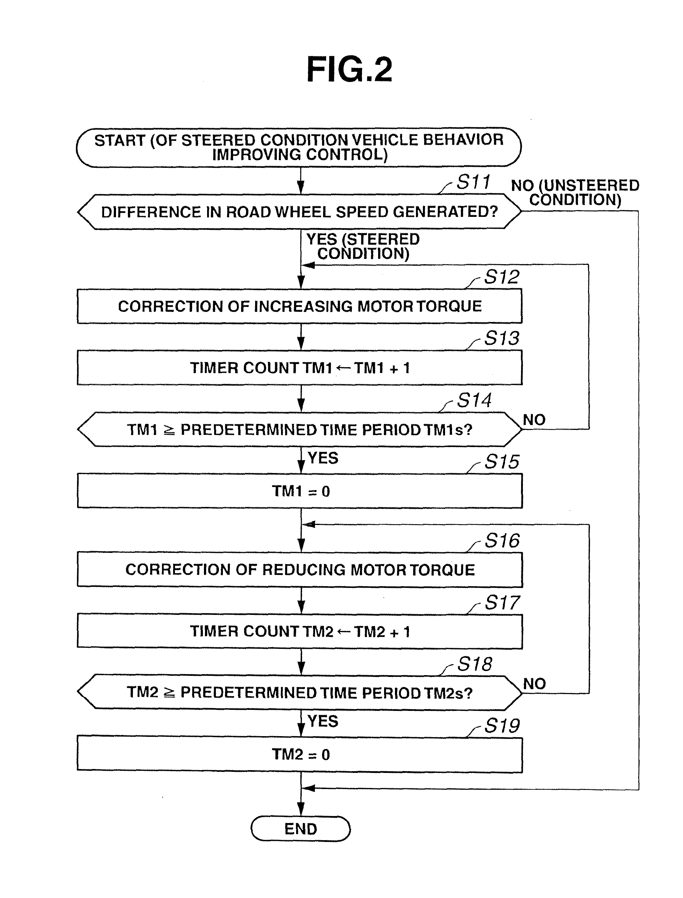

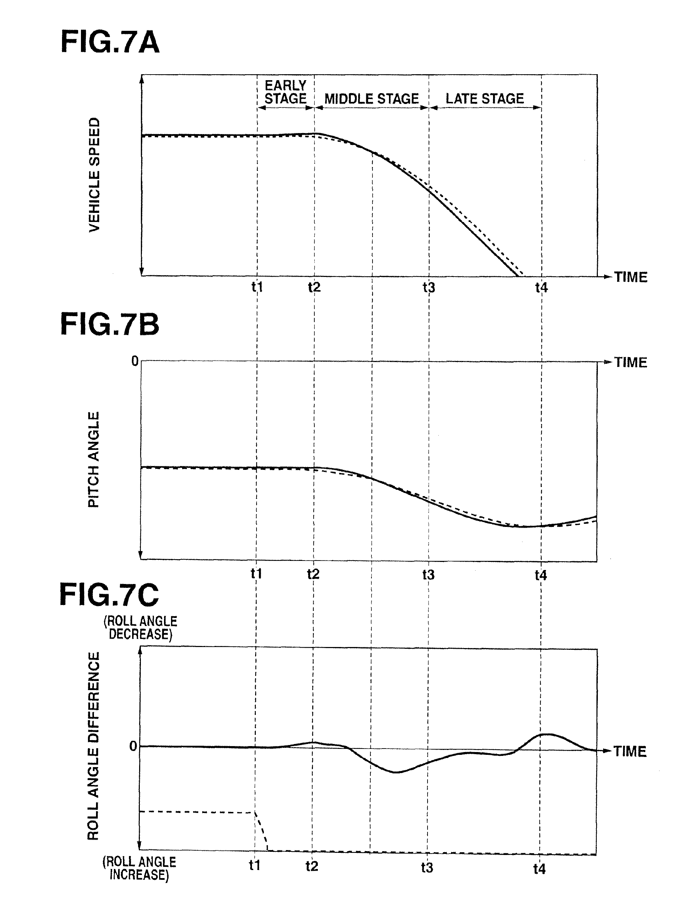

FIG. 7 is a time chart of operation of the steered condition vehicle behavior improving control of FIG. 2, wherein FIG. 7A is a time chart showing a change in time of vehicle speed in comparison with a case in which the steered condition vehicle behavior improving control of FIG. 2 is not performed, FIG. 7B is a time chart showing a change in time of vehicle pitch angle in comparison with a case in which the steered condition vehicle behavior improving control of FIG. 2 is not performed, and FIG. 7C is a time chart showing a change in time of difference in roll angle in comparison with a case in which the steered condition vehicle behavior improving control of FIG. 2 is not performed.

**Mode(s) for Carrying Out the Invention**

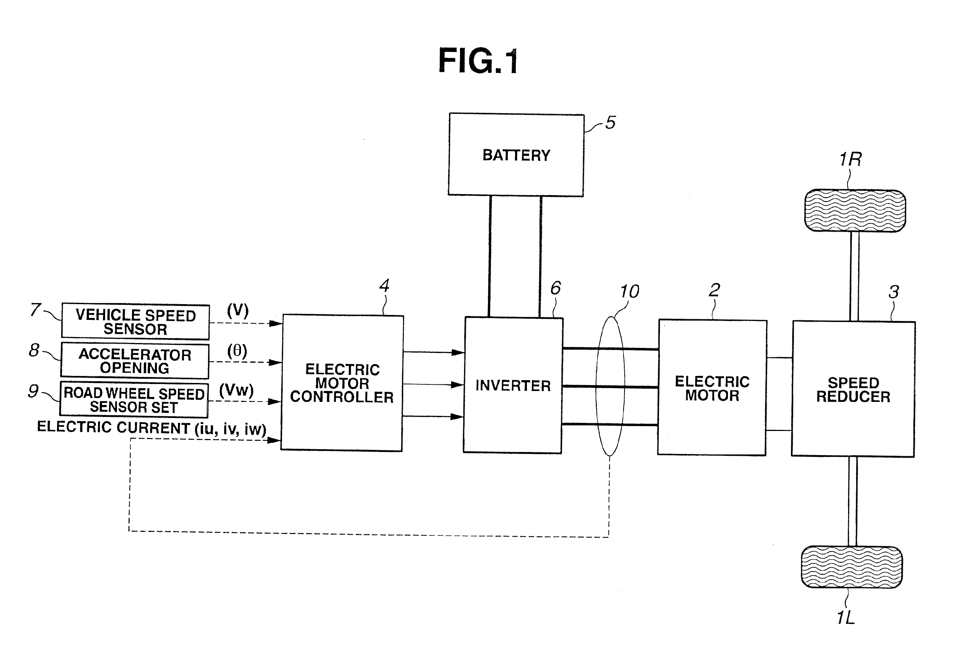

The following describes modes for carrying out the present invention with reference to an embodiment shown in the drawings.
<Configuration> FIG. 1 shows a drive system of a vehicle and a control system for the drive system, wherein the vehicle is provided with a steered condition vehicle behavior improving apparatus according to an embodiment of the present invention. In the embodiment, the vehicle of FIG. 1 is an electric vehicle that is capable of running with left and right front wheels 1L, 1R driven, wherein left and right front wheels 1L, 1R are steerable wheels. The driving of left and right front wheels 1L, 1R is implemented by driving the left and right front wheels 1L, 1R by an electric motor 2 as a power source through a speed reducer 3, wherein speed reducer 3 includes a differential gear.
Driving force of electric motor 2 is controlled by an electric motor controller 4 which performs DC-AC conversion from power of a battery 5 as a power supply by an inverter 6, and supplies the AC power to electric motor 2 under control of inverter 6, so as to conform the torque of electric motor 2 to a target motor torque as a result of calculation obtained by electric motor controller 4.
If the target motor torque as a result of calculation obtained by electric motor controller 4 is of a negative polarity which requests regenerative braking operation of electric motor 2, then electric motor controller 4 applies a load of generation to electric motor 2 through inverter 6, and performs AC-DC conversion from the power generated by regenerative braking operation of electric motor 2, and charges battery 5.
Electric motor controller 4 receives input of information used to calculate the target motor torque described above. The information includes a signal from a vehicle speed sensor 7 that detects a vehicle speed V that is a speed of the electric vehicle with respect to ground, and a signal from an accelerator opening sensor 8 that detects an accelerator opening θ (electric motor requested load) made by driving operation, and a signal from a road wheel speed sensor set 9 that detects individual road wheel speeds Vw of left and right front wheels 1L, 1R and left and right rear wheels not shown, and a signal from an electric current sensor 10 that detects electric currents of electric motor 2 (electric currents iu, iv, iw in FIG. 1, for creating three-phase alternating currents composed of U-phase, V-phase, and W-phase).
Electric motor controller 4 generates a PWM signal for controlling the electric motor 2 based on the above information, and generates a drive signal for inverter 6 through a drive circuit based on the PWM signal. For example, inverter 6 is composed of two switching elements (for example, power semiconductor elements such as IGBTs) for each phase, and supplies a desired current to electric motor 2 while turning ON/OFF the switching elements according to the drive signal and performing conversion from the direct current supplied from battery 5 to AC and reverse conversion.
Electric motor 2 generates a driving force based on the AC current supplied from inverter 6, and transmits the driving force to left and right front wheels 1L, 1R (left and right steerable wheels) through speed reducer 3. While the vehicle is running so that electric motor 2 is dragged by left and right front wheels 1L, 1R, i.e. electric motor 2 is in the so-called state of inverse drive, electric motor 2 is applied with a load of generation to perform regenerative braking operation, and regenerate the kinetic energy of the vehicle, and charge the battery 5.

<Steered Condition Vehicle Behavior Improving Control> Electric motor controller 4 executes a control program shown in FIG. 2, and performs a steered condition vehicle behavior improving control through driving force control for electric motor 2.

At Step S11, electric motor controller 4 checks whether or not steering operation of steering left and right front wheels 1L, 1R is performed, by determining, based on road wheel speed Vw of each road wheel detected by road wheel speed sensor set 9, whether or not a difference in road wheel speed between left and right front wheels 1L, 1R, or a difference in road wheel speed between front and rear wheels not shown, namely, a difference between an average road wheel speed of left and right front wheels 1L, 1R and an average road wheel speed of left and right rear wheels not shown, is above a threshold for determining steering operation. Accordingly, Step S11 corresponds to a steering operation detecting means in the present invention.

Under non-steering operation condition in which it is determined that the difference in road wheel speed is smaller than a set value, it is unnecessary to perform the steered condition vehicle behavior improving control, so that electric motor controller 4 exits from the control program of FIG. 2. Under steering operation condition in which it is determined that the difference in road wheel speed is greater than or equal to the set value, it is necessary to perform the steered condition vehicle behavior improving control, so that electric motor controller 4 proceeds to Step S12 and the following steps in which electric motor controller 4 performs the steered condition vehicle behavior improving control through the driving force control of electric motor 2 as follows.

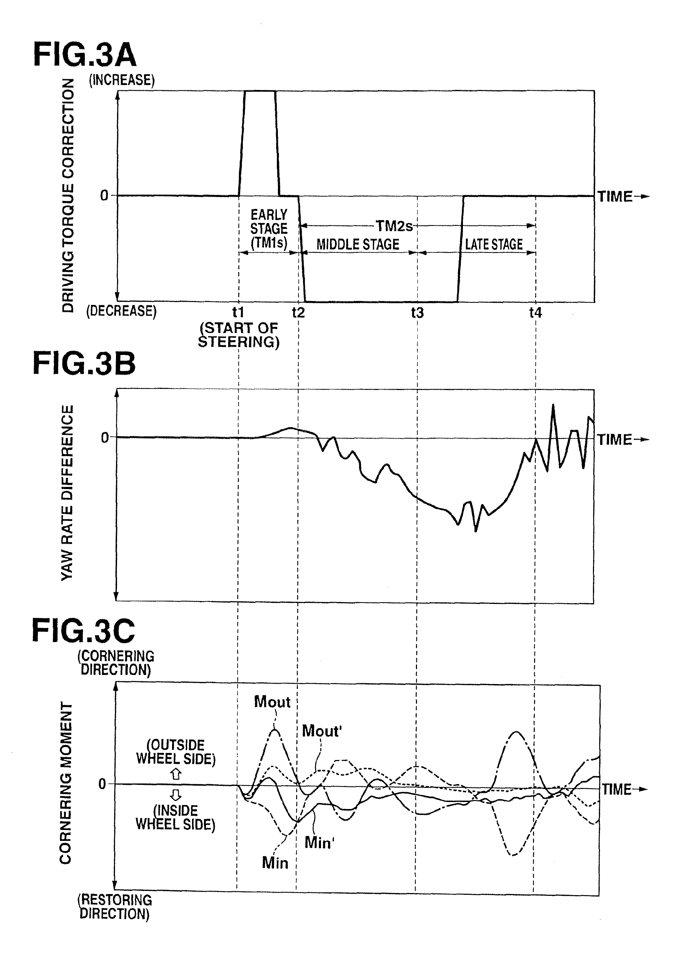

At Step S12, electric motor controller 4 performs a motor torque increasing correction of correcting a target motor torque by an increment of a driving torque correction immediately after a time instant t1 when steering operation is started as represented by a solid waveform in FIG. 3A, wherein the target motor torque of electric motor 2 is determined based on vehicle speed V and accelerator opening APO by using a prepared motor torque map. Accordingly, Step S12 corresponds to a driving force increasing means in the present invention.

At the following Step S13, electric motor controller 4 increments a timer count TM1, and thereby measures a time period elapsed after time instant t1 when the motor torque increasing correction is started (when steering operation is started). At Step S14, electric motor controller 4 checks whether or not timer count TM1 indicates a predetermined time period TM1s, namely, whether or not a time instant t2 in FIG. 3A is reached after the predetermined time period TM1s has elapsed after time instant t1 when the motor torque increasing correction is started (when steering operation is started).

Until it is determined at Step S14 that TM1 ≧ Tm1s (time instant t2 in FIG. 3 is reached after the predetermined time period TM1s has elapsed from time instant t1 when the motor torque increasing correction is started), electric motor controller 4 returns the control to Steps S12 and S13 so that electric motor controller 4 continues the motor torque increasing correction based on the solid line waveform in FIG. 3A at Step S12, and measures the continuation time period of the motor torque increasing correction at Step S13.

At time instant t2 in FIG. 3A when it is determined at Step S14 that TM1 ≧ Tm1s (the motor torque increasing correction is performed just for the predetermined time period TM1s), electric motor controller 4 advances the control to Steps S15 to S17. At Step S15, electric motor controller 4 resets the timer count TM1 to zero for next execution. At Step S16, electric motor controller 4 performs a motor torque reducing correction of correcting the target motor torque by a decrement of driving torque correction immediately after time instant t2 when the motor torque increasing correction is terminated as represented by the solid waveform in FIG. 3A. At the following Step S17, electric motor controller 4 increments a timer count TM2, and thereby measures a time period elapsed after time instant t2 when the motor torque reducing correction is started.

At Step S18, electric motor controller 4 checks whether or not timer count TM2 indicates a predetermined time period TM2s, namely, whether or not a time instant t4 in FIG. 3A is reached after the predetermined time period TM2s has elapsed after time instant t2 when the motor torque reducing correction is started. Until it is determined at Step S18 that TM2 ≧ Tm2s (time instant t4 in FIG. 3 is reached after the predetermined time period TM2s has elapsed after time instant t2 when the motor torque reducing correction is started), electric motor controller 4 returns the control to Steps S16 and S17 so that electric motor controller 4 continues the motor torque reducing correction based on the solid line waveform in FIG. 3A at Step S16, and measures the continuation time period of the motor torque reducing correction at Step S17.

At time instant t4 in FIG. 3A when it is determined at Step S18 that TM2 ≧ Tm2s (the motor torque reducing correction is performed just for the predetermined time period TM2s), electric motor controller 4 advances the control to Step S19. At Step S19, electric motor controller 4 resets the timer count TM2 to zero for next execution.

By the motor driving force control for electric motor 2 shown in FIG. 2, the motor torque is controlled to a value obtained by temporary increase represented by the solid line waveform in FIG. 3A relative to the target motor torque during a period from time instant t1 when steering operation is started to time instant t2 when the predetermined time period TM 1s has elapsed after time instant t1 in FIG. 3A, and is controlled to a value obtained by temporary decrease represented by the solid line waveform in FIG. 3A relative to the target motor torque during a period from time instant t2 when the motor torque increasing correction is terminated to time instant t4 when the predetermined time period TM2s has elapsed after time instant t2 in FIG. 3A.

<Functions and Effects> The foregoing motor driving force control serves to improve steered condition vehicle behavior as follows.

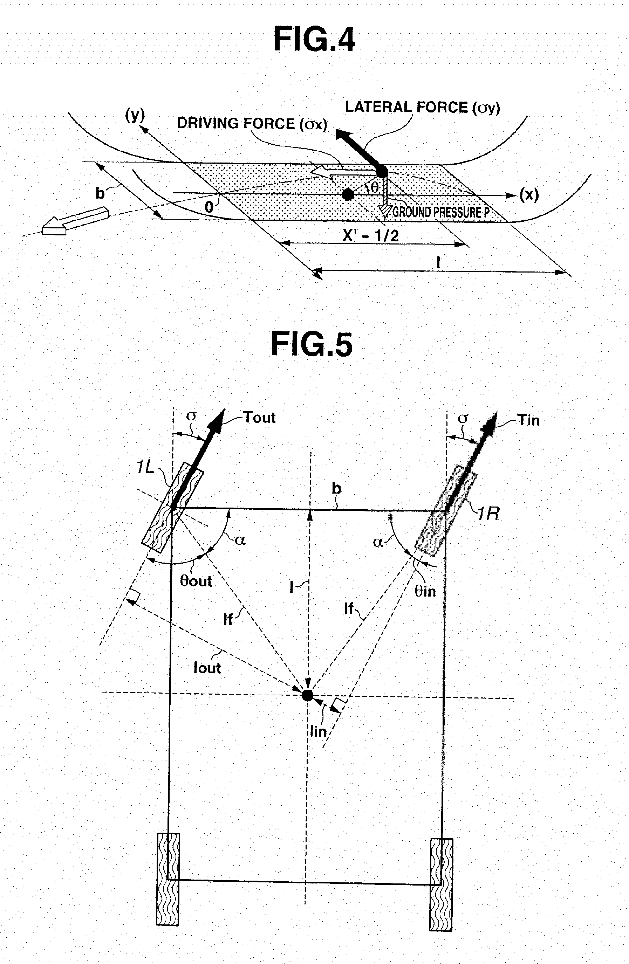

In a case where specifications about tire contact surface are as shown in FIG. 4 and specifications of the vehicle are as shown in FIG. 5, a cornering moment M generated by individual steerable wheel (front wheel) 1L, 1R can be determined by using the following equation by subtracting the second term of the right hand side of the equation from the first term of the right hand side of the equation, wherein the first term is a cornering moment resulting from a lateral force σy, and the second term is a cornering moment resulting from a longitudinal force σx.

$$M = b\left[\int_0^{x'}\left(x'-\frac{\ell}{2}\right)\sigma_y dx' + \int_{x'}^{\ell}\left(x'-\frac{\ell}{2}\right)(-\mu p \sin\theta)\,dx'\right]$$
$$- b\left[\int_0^{x'} y\sigma_x dx' + \int_{x'}^{\ell}\frac{\mu p \sin\theta}{K_y}(-\mu p \cos\theta)\,dx'\right]$$

(Equation 1)

On the other hand, a cornering moment Mfr generated cooperatively by steerable wheels (front wheels) 1L, 1R can be determined by using the following equation based on a cornering-outside wheel cornering moment Mout and a cornering-inside wheel cornering moment (restoring moment) Min which can be determined by using the above equation.

$$M_{fr} = M_{out} - M_{in}$$

$$= T_{out}\ell_{out} - T_{in}\ell_{in}$$

$$= T_{out}\ell_f \sin(90 + \sigma - \alpha) - T_{in}\ell_f \sin(90 - \sigma - \alpha)$$

(Equation 2)

When the steered condition motor driving force control of FIG. 2 is performed, the cornering-outside wheel cornering moment Mout and the cornering-inside wheel cornering moment (restoring moment) Min are as shown in FIG. 3C.

As compared to a cornering-outside wheel cornering moment Mout' for a case where the steered condition motor driving force control of FIG. 2 is not performed, the cornering-outside wheel cornering moment Mout is significantly increased larger by the motor torque increasing correction during the early stage from time instant t1 to time instant t2 as shown in FIG. 3C, and is made to have a more restoring tendency by the motor torque reducing correction during the middle stage from time instant t2 to time instant t3 and the late stage from time instant t3 to time instant t4.

On the other hand, as shown in FIG. 3C, the cornering-inside wheel cornering moment (restoring moment) Min for the case where the steered condition motor driving force control (motor torque increasing and reducing correction) of FIG. 2 is performed is not different very much from a cornering-inside wheel cornering moment (restoring moment) Min' for a case where this motor torque correction is not performed.

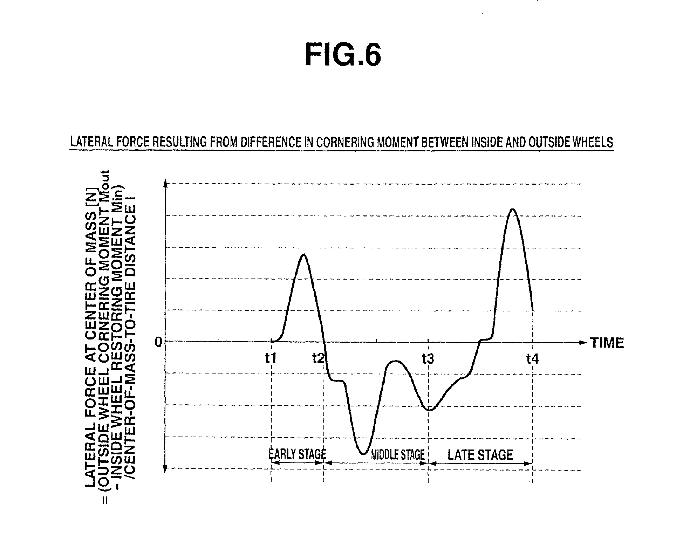

Accordingly, when the steered condition motor driving force control of FIG. 2 is performed, the cornering moment resulting from the difference between the cornering-outside wheel cornering moment Mout and the cornering-inside wheel cornering moment (restoring moment) Min becomes larger during the early stage from time instant t1 to time instant t2, and an apparent lateral force obtained by dividing (Mout - Min) by a center-of-mass-to-axle distance I is increased during the early stage from time instant t1 to time instant t2 as shown in FIG. 6. As a result, the difference (increment) in yaw rate of the vehicle quickly rises during the early stage from time instant t1 to time instant t2 as indicated by a solid line in FIG. 3B, so that the yaw rate can be raised without delay, and that the steering response (or initial head-turning ability) of the vehicle can be significantly improved.

On the other hand, during the middle stage from time instant t2 to time instant t3 and during the late stage from time instant t3 to time instant t4, the cornering-outside wheel cornering moment Mout has a more restoring tendency than cornering-outside wheel cornering moment Mout' for the case where the steered condition motor driving force control of FIG. 2 is not performed. This serves to allow the cornering behavior of the vehicle to return quickly to an original one.

In view of the foregoing functions and effects, the quantity of increase by the motor torque increasing correction performed during the early stage from time instant t1 when steering operation is started to time instant t2 when the predetermined time period TM1s has elapsed after time instant t1 as shown in FIG. 3A needs to be large enough to achieve the object described above. However, naturally, the quantity of motor torque increasing correction is preferably set such that a passenger of the vehicle fails to perceive acceleration, and fails to feel uncomfortable. It is naturally preferable that the predetermined time period TM1s is set to a very short time period such as 0.1 second, which is a minimum time period required for making the motor torque increasing correction effective to improve the steering response, so that the motor torque increasing correction is prevented from continuing after that period and producing adverse effects.

Moreover, the quantity of motor torque reducing correction performed during the middle and late stages from time instant t2 to time instant t4 when the predetermined time period TM2s has elapsed, as shown in FIG. 3A, needs to be large enough to achieve the object described above of quickly returning the head turning ability enhanced in the early stage to a normal one. However, naturally, the quantity of motor torque reducing correction is preferably set such that a passenger of the vehicle fails to perceive deceleration, and fails to feel uncomfortable. It is naturally preferable that the predetermined time period TM2s is set to a minimum time period such as 0.4 second required for achieving the return of head turning ability by the motor torque reducing correction, to prevent the motor torque reducing correction from continuing after that period and producing adverse effects.

When the steered condition motor driving force control of FIG. 2 is performed, the following effects are produced in addition to the foregoing, as clearly shown in FIG. 7 which shows time charts under the same condition as FIGS. 3 and 6.

Specifically, in the case where the steered condition motor driving force control of FIG. 2 is not performed, vehicle speed V falls immediately after the early stage from time instant t1 to time instant t2 as shown by a broken line in FIG. 7A, so that the pitch angle of the vehicle increases after the early stage from time instant t1 to time instant t2 as shown by a broken line in FIG. 7B. This increase of pitch angle results in a rapid change of the difference in roll angle in the direction to increase the roll angle. In the case of the electric vehicle, the suspension stroke is relatively large for the reason described above, which causes a problem that the roll feel of the vehicle is bad immediately after the steering operation.

In contrast, in the case where the steered condition motor driving force control of FIG. 2 is performed as in the present embodiment, the motor torque increasing correction during the early stage from time instant t1 to time instant t2 described with reference to FIG. 3A, causes a temporary increase in vehicle speed V during a period from the early stage to the first half of the meddle stage.

The temporary rise in vehicle speed V serves to maintain the pitch angle of the vehicle to a value at time instant t1 when steering operation is started, during the period to the first half of the middle stage. The holding of the pitch angle causes that the difference in roll angle is set to a value in a direction to reduce the roll angle during the period to the first half of the middle stage as shown by the solid line in FIG. 7C, thus preventing the vehicle from rolling immediately after steering operation, and thus improving the roll feel of the vehicle immediately after steering operation.

As clearly understood from the foregoing description, the present embodiment serves to obtain the effect of improving vehicle behavior during steering operation, without causing a change in the attachment rigidity of the suspension device or the damping performance of a shock absorber, and thereby achieve the aimed object, without causing a new problem about oscillation and noise by increasing the spring coefficient of the suspension device.

The feature of the present embodiment that the determination whether or not steering operation is performed at Step S11 of FIG. 2 is implemented by checking based on the difference in road wheel speed among road wheels whether or not steering operation of left and right front wheels 1L, 1R is performed, allows to quickly complete the determination about steering operation, as compared to cases where the determination is implemented by detecting the steering angle, and also allows the motor torque increasing and reducing correction to be performed with high response, thereby further ensuring the functions and effects described above.

Moreover, the feature of the present embodiment that the quantity of motor torque increasing correction is maintained for the predetermined time period as indicated by the torque waveform from time instant t1 to time instant t2 in FIG. 3A, during the steered condition motor torque increasing correction performed at Step S12 of FIG. 2, serves to maintain the motor torque to a value increased at steering operation for the predetermined time period, and thereby obtain the functions and effects described above for the long time period, and improve the steering response and roll feel of the vehicle during the predetermined time period after time instant t1 when steering operation is performed.

<Other Embodiment(s)> Although the foregoing describes the example with reference to the drawings in which the present invention is applied to the vehicle in which steerable left and right front wheels 1L, 1R are driven, the present invention may be applied to a vehicle in which left and right rear wheels are driven by a motor instead of or in addition to left and right front wheels 1L, 1R, or may be applied to a vehicle in which road wheels are driven by their respective electric motors. Also in such cases, it is clear that the functions and effects described above can be obtained by the driving force increasing and reducing correction control of FIG. 2.

Incidentally, the power source for driving road wheels is not limited to a rotary electric power source such as electric motor 2, but may be an engine such as an internal combustion engine. Also in such cases, the functions and effects described above can be obtained by the driving force increasing and reducing correction control of FIG. 2. However, engines are lower in control response than rotary power sources, so that it is advantageous that the driving force increasing and reducing correction control of FIG. 2 is applied to a rotary electric power source, to ensure the functions and effects described above.

## Claims

1. A steered condition vehicle behavior improving apparatus for a vehicle, wherein the vehicle is capable of running with a road wheel driven by a driving force from a power source, the steered condition vehicle behavior improving apparatus comprising:

   a steering operation detecting means that detects a steering operation of steering a steerable wheel of the vehicle; and
   a driving force increasing means that temporarily increases the driving force to the road wheel in response to detection of the steering operation by the steering operation detecting means.

2. The steered condition vehicle behavior improving apparatus as claimed in Claim 1, wherein the steering operation detecting means detects the steering operation based on a difference in rotational speed among a plurality of road wheels of the vehicle.

3. The steered condition vehicle behavior improving apparatus as claimed in Claim 1 or 2, wherein the driving force increasing means holds the driving force at a driving force value obtained by the increase for a predetermined time period in response to the detection of the steering operation.

4. The steered condition vehicle behavior improving apparatus as claimed in any one of Claims 1 to 3, wherein the increase of the driving force is such that a passenger of the vehicle fails to perceive acceleration.

5. The steered condition vehicle behavior improving apparatus as claimed in any one of Claims 1 to 4, wherein the driving force increasing means temporarily reduces the increased driving force to a driving force value smaller than before the increase, and thereafter returns the driving force to a driving force value before the increase.

6. The steered condition vehicle behavior improving apparatus as claimed in any one of Claims 1 to 5, wherein:

   the vehicle is an electric vehicle in which at least part of the driving force is supplied by an electric motor; and
   the driving force increasing means controls the increase of the driving force through the electric motor.

**FIG.1**

# FIG.2

START (OF STEERED CONDITION VEHICLE BEHAVIOR IMPROVING CONTROL)

S11

DIFFERENCE IN ROAD WHEEL SPEED GENERATED? — NO (UNSTEERED CONDITION)

YES (STEERED CONDITION)

S12

CORRECTION OF INCREASING MOTOR TORQUE

S13

TIMER COUNT TM1 ← TM1 + 1

S14

TM1 ≧ PREDETERMINED TIME PERIOD TM1s? — NO

YES

S15

TM1 = 0

S16

CORRECTION OF REDUCING MOTOR TORQUE

S17

TIMER COUNT TM2 ← TM2 + 1

S18

TM2 ≧ PREDETERMINED TIME PERIOD TM2s? — NO

YES

S19

TM2 = 0

END

# FIG.3A

# FIG.3B

# FIG.3C

# FIG.4

# FIG.5

# FIG.6

LATERAL FORCE RESULTING FROM DIFFERENCE IN CORNERING MOMENT BETWEEN INSIDE AND OUTSIDE WHEELS

# FIG.7A

EARLY STAGE | MIDDLE STAGE | LATE STAGE

VEHICLE SPEED

t1    t2    t3    t4    TIME

# FIG.7B

0    TIME

PITCH ANGLE

t1    t2    t3    t4

# FIG.7C

(ROLL ANGLE DECREASE)

ROLL ANGLE DIFFERENCE

0    TIME

(ROLL ANGLE INCREASE)

t1    t2    t3    t4

13

## INTERNATIONAL SEARCH REPORT

| International application No. |
| --- |
| PCT/JP2011/059174 |

A. CLASSIFICATION OF SUBJECT MATTER
*B60W30/02*(2006.01)i, *B60L9/18*(2006.01)i, *B60W10/08*(2006.01)i

According to International Patent Classification (IPC) or to both national classification and IPC

B. FIELDS SEARCHED

Minimum documentation searched (classification system followed by classification symbols)
B60W30/02, B60L9/18, B60W10/08

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>A | JP 10-86705 A (Denso Corp.),<br>07 April 1998 (07.04.1998),<br>paragraphs [0008], [0018], [0082]<br>(Family: none) | 1-4,6<br>5 |
| Y | JP 10-287262 A (Nissan Motor Co., Ltd.),<br>27 October 1998 (27.10.1998),<br>paragraph [0030]<br>& US 6208921 B1     & DE 19816928 A | 2 |

☐ Further documents are listed in the continuation of Box C.    ☐ See patent family annex.

| | | |
| --- | --- | --- |
| \* | Special categories of cited documents: | |
| "A" | document defining the general state of the art which is not considered to be of particular relevance | "T"   later document published after the international filing date or priority date and not in conflict with the application but cited to understand the principle or theory underlying the invention |
| "E" | earlier application or patent but published on or after the international filing date | "X"   document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"   document member of the same patent family |

| Date of the actual completion of the international search | Date of mailing of the international search report |
| --- | --- |
| 24 June, 2011 (24.06.11) | 05 July, 2011 (05.07.11) |

| Name and mailing address of the ISA/<br>Japanese Patent Office | Authorized officer |
| --- | --- |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7132720 A